# EUROPEAN PATENT APPLICATION

(11) **EP 1 868 360 A1**
(43) Date of publication of application: **19.12.2007**
(21) Application number: 06741733.7
(22) Date of filing: 26.04.2006
(51) Int. Cl.: H04M 3/42, H04M 11/00

(54) **A METHOD FOR RECEIVING THE EMAIL REAL TIME IN A HANDSET AND A SYSTEM THEREOF**

(30) Priority: 20.03.2006 CN 200610034300
(71) Applicant: Wong, Kamfu, Hong Kong (CN)
(72) Inventor: Wong, Kamfu, Hong Kong (CN)
(74) Representative: Epping - Hermann - Fischer
(86) International application number: PCT/CN2006/000808
(87) International publication number: WO 2007/121615

(57) **Abstract**

The present invention discloses a system and method for receiving an Email instantly via a mobile phone, which comprises the following steps of: presetting a table wherein an Email address for the user corresponds to a mobile phone number for the user within an server of an Email processing device, and finds out the mobile phone number for the user corresponding to a recipient of the new Email in said table according to the Email address for the recipient of the new Email when the server receives the Email sent to the user, and then immediately dialing the mobile phone number for the user via a fixed phone and hanging up after getting through. The user knows the new Email is delivered to him by recognizing that the incoming call coming from the server, and can instantly be connected to download the Email. In the present invention, the server utilizes a dialing up way to initiatively inform the user of the arrival of the new Email, such that the mobile phone needlessly inquire of the server whether the new Email arrives or not. Moreover, only when the server receives the new Email sent to the user, does it inform the mobile phone for the user to download the Email promptly. In this way, no data flow amounts are wasted, and the burden placed on the network is lightened. Hence, the method is a real method for receiving an Email instantly.

## Description

### TECHNICAL FIELD

The present invention relates to a system and method for receiving an Email via a mobile phone, more particularly to a system and method for receiving an Email (i.e. electronic mail) in instantly via a mobile phone.

### BACKGROUND TECHNOLOGY

Nowadays, when using a mobile phone to receive/send an Email, the user generally executes an Email receiving/sending program by pressing the keys on the mobile phone. The program then inquires of an Email server whether a latest unreceived Email is available by way of mobile network. Alternatively, the user sets in the program an automatic timing inquiry of the Email server as to whether there is a new Email. Only when an unreceived new Email is found, does the program start to download the Email from the Email server. Generally, the user has no idea when the new Email arrives until he initiatively inquiries. Therefore, even if an automatic inquiry mode is set, when the Email server receives the new Email, the Email receiving/sending program cannot find the new Email until the initiative inquiry. Only then does it start to download the Email and request the user to read the Email. The time interval from receiving the new Email in the Email server to inform the user by the Email receiving/sending program in the mobile may range from several seconds to decades of minutes, which depends on the automatic inquiry interval set by the user and the time for arrival of the Email. The user generally sets the automatic inquiry internal as ten to dozens of minutes. In most cases, the user will not know about the new Email until a delay of several to dozens of minutes. Therefore, the user is unable to receive and read new Email immediately after they arrive at the Email server. Though the user can set a very short automatic inquiry interval to shorten the time delay, every time the Email receiving/sending program in the mobile inquiries of the Email server about the Emails, it occupies certain amounts of dada flow. Even if there are no new Emails, certain amounts of dada flow have to be taken up. Moreover, a short automatic inquiry interval means more amounts of data flow have to be consumed and more burdens are easily put on the network.

### SUMMARY OF THE INVENTION

The main object of the present invention is to solve problems in the prior art, i.e., to provide a system and method for receiving an Email in instantly via a mobile phone, such that a user is able to know an Email arrived at an Email server promptly and thus the mobile phone for the user can be connected in time to download the Email for the user to read.

To achieve the above object, the present invention provides a system for receiving an Email in instantly via a mobile phone, which comprises: an Email processing device comprising a preset table wherein an Email address for a user corresponds to a mobile phone number for the user, the Email processing device being used for detecting whether a new Email arrived at an Email server and, and finding out the mobile phone number for the user corresponding to a recipient of the new Email in said table according to the new Email address for the recipient of the new Email when the new Email arrives; and a calling device attached to the Email processing device, which is for dialing the mobile phone number for the user to inform the user of the arrival of the new Email according to the mobile phone number for the user found out by the Email processing device.

The Email processing device therein comprises: an Email monitoring unit for detecting whether the new Email arrived at the Email server, which outputs new Email information when the new Email arrives; an Email information reading unit for receiving the new Email information output by the Email monitoring unit, which reads and outputs the new Email address for the recipient; and a user mobile phone number corresponding unit for receiving the new Email address for the recipient of the new Email output by the Email information reading unit, which finds out the mobile phone number for the user corresponding to the recipient of the new Email in said table according to the Email address for the recipient and outputs the mobile phone number for user to the call informing device.

Said call informing device is preferably a MODEM for dialing the mobile phone number for the user.

To achieve the above object, the present invention further provides a system for receiving an Email in instantly via a mobile phone, which comprises: an Email processing device comprising a preset table wherein an Email address for a user corresponds to a mobile phone number for the user, the Email processing device being used for detecting whether a new Email arrives at an Email server and finding out the mobile phone number for the user corresponding to a recipient of the new Email in said table according to the new Email address for the recipient when the new Email arrives; a call informing device attached to the Email processing device, which is for informing the user of the arrival of the new Email according to the mobile phone number for the user found out by the Email processing device; and an automatic Email receiving device located at a user mobile terminal, which is for detecting an incoming call and receiving an Email, and which, when the incoming call comes from the Email processing device, is automatically connected to access the Email processing device to download the new Email sent to the user.

The Email processing device therein comprises: an Email monitoring unit for detecting whether the new Email arrives at the Email server, which outputs new Email information when the new Email arrives; an Email information reading unit for receiving the new Email information output by the Email monitoring unit, which reads and outputs the new Email address for the recipient of the new Email; and a user mobile phone number corresponding unit for receiving the Email address for the recipient of the new Email output by the Email information reading unit, which finds out the corresponding mobile phone number for the user corresponding to the recipient in said table according to the Email address for the recipient of the new Email and outputs the mobile phone number for the user to the call informing device.

The automatic Email receiving device therein comprises: an incoming call number judging unit for judging whether the incoming call comes from the Email processing device based on a number corresponding to the incoming call, which outputs information when the incoming call comes from the Email processing device; a notifying unit for receiving the information output from the incoming call number judging unit, which notifies the user of the arrival of the new Email; and an automatic downloading unit for receiving the information output from the incoming call number judging unit, which is automatically connected to access the Email processing device to download the new Email sent to the user.

Said automatic Email receiving device may further comprises: a ringing judging unit attached to the incoming call number judging unit and the notifying unit, which is for judging whether a ringing time is shorter than a preset value when the incoming call number judging unit fails to detect the number corresponding to the incoming call, and which outputs information to the notifying unit when the ringing time is shorter than the preset value.

To achieve the above object, the present invention additionally provides a method for receiving an Email instantly via a mobile phone, which comprises the steps of:
A1. presetting a table wherein an Email address for a user corresponds to a mobile phone number for the user within an Email processing device, which detects whether a new Email arrives at an Email server and finds out the mobile phone number for the user corresponding to a recipient of the new Email in said table according to the Email address for the recipient of the new Email when the new Email arrives; and
B1. dialing the mobile phone number for the user to inform the user of the arrival of the new Email.

Wherein step B1 comprises the following step:
B11. The Email processing device dials the mobile phone number for the user by a call informing device and automatically hangs up the line within a preset time after getting through the line.
   The present invention makes further improvements: when the call informing device fails to get through the mobile phone for the user in said step B11, the call informing device will repeatedly and automatically redial the mobile phone number for the user every designated time interval until the mobile phone for the user is through.
   To achieve the above object, the present invention further provides a method for receiving an Email in instantly via a mobile phone, which comprises the steps of:
A2. presetting a table wherein an Email address for a user corresponds to a mobile phone number for the user within an Email processing device which detects whether a new Email arrives and finds out the mobile phone number for the user corresponding to a recipient in said table according to the Email address for the recipient of the new Email when the new Email arrives;
B2. dialing the mobile phone number for the user to inform the user of the arrival of the new Email; and
C2. Automatically being connected to access the Email processing device to download the new Email sent to the user when an automatic Email receiving device located at a user mobile terminal determines that an incoming call comes from the Email processing device according to a number corresponding to the incoming.

The present invention makes further improvements: when the automatic Email receiving device fails to detect the number corresponding to the incoming call in said step C2, judging whether a ringing time is shorter than a preset value, and if so, automatically being connected to access the Email processing device to download the new Email sent to the user.

In above said step C2, the automatic Email receiving device informs the user of the arrival of the new Email via voice, text or vibrating information.

The further improvements made by the present invention are as follows: when the automatic Email receiving device is downloading the new Email sent to the user in said step C2, it firstly downloads designated data amounts in the most front of the Email, and is then connected to access the Email processing device to download the remaining part of the Email when receiving the command of downloading all.

What the present invention further improves is as follows: before the automatic Email receiving device is automatically connected to receive an Email in said step C2, there further comprises the following step of inquiring of the user whether to download the Email. If the user chooses to download the Email, the automatic Email receiving device will be automatically connected to access the Email processing device to download the new Email sent to the user, so long as the user simply presses a key preset on the user mobile terminal.

To achieve the above object, the present invention further provides a system for receiving an Email in instantly via a mobile phone, which comprises: an Email processing device comprising a preset table wherein an Email address for a user corresponds to a mobile phone number for the user, and setting up an account for the user wherein an Email address for an sender corresponds to a caller ID for informing the user according to a setup for the user in the account. The Email processing device is for detecting whether a new Email arrives at an Email server, which finds out the mobile phone number for the user corresponding to a recipient of the new Email in said table according to the Email address for the recipient of the new Email when a new Email arrives, and finds out, in the account for the user, the caller ID corresponding to the sender according to the Email address for the sender; and a call informing device attached to the Email processing device, which is for dialing the mobile phone for the user to inform the user of the arrival of the new Email with the caller ID corresponding to the sender, according to the mobile phone number for the user found out by the Email processing device.

The Email processing device therein comprises: an Email monitoring unit for detecting whether the new Email arrives at the Email server, which outputs new Email information when the new Email arrives; an Email information reading unit for receiving the new Email information output by the Email monitoring unit, which reads and outputs the Email address for the recipient and the Email address for the sender of the new Email; a user mobile phone number corresponding unit for receiving the Email address for the recipient of the new Email output by the Email information reading unit, which finds out the mobile phone number for the user corresponding to the recipient in said table according to the Email address for the recipient and outputs the mobile phone number for the user to the call informing device; and an outgoing call number corresponding unit for receiving the Email address for the recipient and the Email address for the sender of the new Email output by the Email information reading unit, which finds out the account for the user based on the Email address for the recipient of the new Email, and then finds out, in the account for the user, the caller ID corresponding to the sender based on the Email address for the sender, and outputs the caller ID corresponding to the sender to the call informing device.

To achieve the above object, the present invention further provides a system for receiving an Email in instantly via a mobile phone, which comprises: an Email processing device comprising a preset table wherein an Email address for a user corresponds to a mobile phone number for the user, and setting up an account for the user wherein an Email address for an sender corresponds to a caller ID for informing the user according to a setup for the user in the account. The Email processing device is for detecting whether a new Email arrives at an Email server, which finds out the mobile phone number for the user corresponding to a recipient of the new Email in said table according to the Email address for the recipient of the new Email when the new Email arrives, and finds out, in the account for the user, the caller ID corresponding to the sender according to the Email address for the sender; a call informing device attached to the Email processing device, which is for dialing the mobile phone for the user to inform the user of the arrival of the new Email with the caller ID corresponding to the sender, according to the mobile phone number for the user found out by the Email processing device; and an automatic Email receiving device located at a user mobile terminal, which is for detecting an incoming call and receiving an Email, wherein, if the incoming call comes from the Email processing device, the automatic Email receiving device finds out the sender or the Email address for the sender corresponding to the caller ID in a table of "sender - caller ID" set by the user; displays the sender or the Email address for the sender on a display and inquires of the user whether to download the Email; and, if the user chooses to download, automatically connected to access the Email processing device to download the new Email sent to the user, so long as the user simply presses a key preset on the user mobile terminal.

The Email processing device therein comprises: an Email monitoring unit for detecting whether the new Email arrives at the Email server, which outputs new Email information when the new Email arrives; an Email information reading unit for receiving the new Email information output by the Email monitoring unit, which reads and outputs the Email address for the recipient and the Email address for the sender of the new Email; a user mobile phone number corresponding unit for receiving the Email address for the recipient of the new Email output by the Email information reading unit, which finds out the mobile phone number for the user corresponding to the recipient of the new Email in said table according to the Email address for the recipient and outputs the mobile phone number for the user to the call informing device; and an outgoing call number corresponding unit for receiving the Email address for the recipient and the Email address for the sender of the new Email output by the Email information reading unit, which finds out the account for the user based on the Email address for the recipient of the Email, and then finds out, in the account for the user, the caller ID corresponding to the sender based on the Email address for the sender, and outputs the caller ID corresponding to the sender to the call informing device. The automatic Email receiving device comprises: a sender corresponding unit, which is for finding out the sender or the Email address for the sender corresponding to the caller ID in the table of "sender - caller ID" set by the user according to the caller ID, and outputting the information about the sender; a notifying unit, for receiving the information about the sender output by the sender corresponding unit, and notifying the user of the arrival of the new Email and displaying the sender or the Email address for the sender; a control unit, for receiving a download command from the user and outputting a control signal for downloading; and an automatic downloading unit, for receiving the information about the sender output by the sender corresponding unit and the control signal for downloading, and then being automatically connected to access the Email processing device to download the new Email sent to the user.

Said automatic Email receiving device further comprises: a ringing judging unit attached to the sender corresponding unit and the notifying unit, for judging whether a ringing time is shorter than a preset value when the sender corresponding unit fails to detect the number corresponding to the incoming call, and outputs information to the notifying unit when the ringing time is shorter than the preset value.

To achieve the above object, the present invention further provides a method for receiving an Email in instantly via a mobile phone, which comprises the steps of:
A3. presetting a table wherein an Email address for a user corresponds to a mobile phone number for the user within an Email processing device, and setting up an account for the user wherein an Email address for an sender corresponds to a caller ID for informing the user according to a setup for the user. The Email processing device is for detecting whether a new Email arrives at an Email server, and finding out the mobile phone number for the user corresponding to a recipient of the new Email in said table according to the Email address for the recipient of the new Email when the new Email arrives;
B3. finding out the caller ID corresponding to the sender in the account for the user on the basis of the Email address for the sender;
C3. dialing the mobile phone number for the user by the call informing device to inform the user of the arrival of the new Email with the caller ID corresponding to the sender.

Wherein said step C3 comprises the step of:
C31. hanging up the line automatically within a certain time after the call informing device gets through the mobile phone for the user.

The present invention makes the following further improvements: when the call informing device fails to get through the mobile phone for the user in said step C31, it will automatically redial the mobile phone number for the user every designated interval until the mobile phone for the user is through.

When the caller ID corresponding to the sender is not found out in step B3, dial the mobile phone for the user with a preset caller ID.

To achieve the above object, the present invention further provides a method for receiving an Email in instantly via a mobile phone, which comprises the steps of:
A4. presetting a table wherein an Email address for a user corresponds to a mobile phone number for the user within an Email processing device, and setting up an account for the user wherein an Email address for the sender corresponds to a caller ID for informing the user according to a setup for the user, the Email processing device being for detecting whether a new Email arrives at an Email server, and finding out the mobile phone number for the user corresponding to a recipient in said table according to the Email address for the recipient of the new Email when the new Email arrives;
B4. finding out the caller ID corresponding to the sender in the account for the user on the basis of the Email address for the sender;
C4. dialing the mobile phone number for the user to inform the user of the arrival of the new Email by a call informing device with the caller ID corresponding to the sender;
D4. judging, by an automatic Email receiving device located at a user mobile terminal, whether an incoming call comes from the Email processing device and finding out the sender or the Email address for the sender corresponding to the incoming call according to the setup for the user; and
E4. displaying the sender or the Email address for the sender on a display, and inquiring of the user whether to download the Email wherein, if the users chooses to download, the automatic Email receiving device is automatically connected to access the Email processing device to download the new Email sent to the user, so long as the user simply presses a key preset on the user mobile terminal.

When the number corresponding to the incoming call fails to be detected in step D4, the automatic Email receiving device judges whether a ringing time is shorter than a preset value, and outputs information to the notifying unit to notify the arrival of the new Email if the ringing time is shorter than the preset value. Alternatively, the automatic Email receiving device notifies the user of the arrival of the new Email if the sender or the Email address for the sender corresponding to the number corresponding to the incoming call fails to be found out in step D4.

The present invention results in the following advantageous effect: 1) the present invention makes it possible that a mobile phone in standby mode need not inquire of an Email server about the arrival of a new Email, and that only when the new Email arrives at the Email server, does the Email server instantly inform the mobile phone for the user to receive the new Email. In this case, all data flow amounts for communication between the Email server and the mobile phone are dedicated to receiving/sending ab Email. There is no such a step as to inquiry about the new Email, such that no data flow amounts are wasted and the burden placed on the network is lightened. In addition, it generally takes several seconds to inform of the user of the arrival of the new Email, which is dozens of times faster than the prior inquiring methods, and thus is a real method for receiving the Email in instantly. 2) Due to the technique as to corresponding the sender to the caller ID for informing the user to receive the new Email, the number corresponding to the incoming call is sufficient to judge who is the sender and enables the user to make a decision whether to download the Email according to the sender. In this way, data flow amounts necessary for connecting network for downloading are further reduced, and the network resources and the cost borne by the user are saved.

The characteristics and advantages of the present invention will be illustrated in great details by way of embodiments in combination with the drawings.

### BRIEF DESCRIPTION OF THE DRAWINGS

Figure 1 is a schematic diagram of one embodiment of the present invention.
Figure 2 is a schematic diagram of one embodiment of the present invention.
Figure 3 is a structural diagram of one embodiment of the present invention.
Figure 4 shows a flow chart of server terminal of one embodiment of the present invention.
Figure 5 shows a flow chart of user mobile terminal of one embodiment of the present invention.
Figure 6 is a structural diagram of another embodiment of the present invention.
Figure 7 shows a flow chart of server terminal of another embodiment of the present invention.
Figure 8 shows a flow chart of user mobile terminal of another embodiment of the present invention.

### DETAILD DESCRIPTION

### Embodiment 1

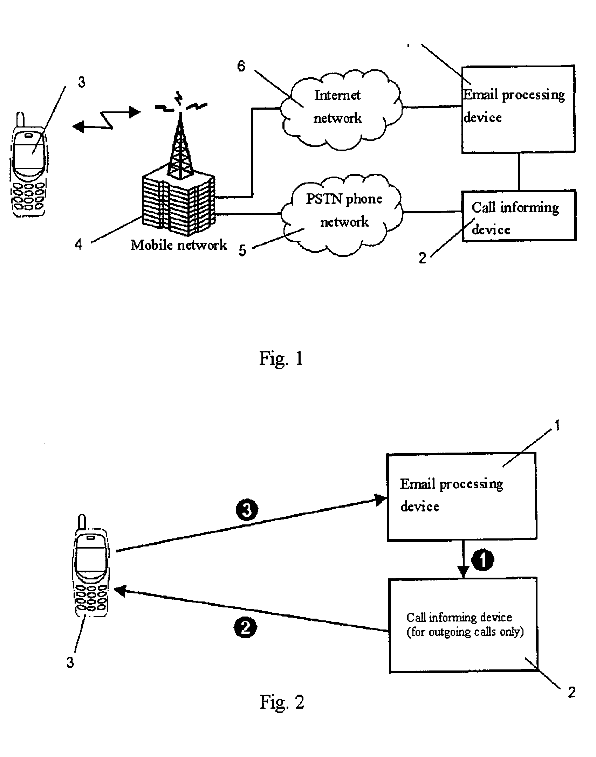

As shown in Fig. 1, the system comprises an Email processing device 1 and a call informing device 2 that are interconnected. The Email processing device 1 communicates with a user mobile terminal 3 via an internet network 6 and a mobile network 4; and the call informing device 2 communicates with the user mobile terminal 3 via a PSTN phone network 5 and the mobile network 4.

The Email processing device 1, a computer server which runs an Email processing program, is for depositing and transferring the Email for the user, and generally uses POP or IMAP or SMTP or other Email communication protocols to receive/send Emails via the internet. Said Email processing device 1 comprises a dialing up processing program and corresponding circuit interface as well as a preset table wherein an Email address for a user corresponds to a mobile phone number for the user, for detecting whether a new Email arrives at the Email processing device 1 and, when there is a new Email, finds out the mobile phone number for the user corresponding to a recipient of the new Email in said table according to the Email address for the recipient of the Email. The call informing device 2 is for dialing phone number, which receives and dials the mobile phone number for the user to be dialed transferred from the Email processing device 1 and automatically hangs up the line after getting through the mobile phone for the user. Alternatively, it may hang up the line within a certain time after the mobile phone for the user is through, for example within one second. The call informing device 2 may use a MODEM to achieve the dialing up function.

The user mobile terminal 3 is a device such as the mobile phone for the user, PDA mobile or the like, provided with an automatic Email receiving device of an Email user terminal. The automatic Email receiving device may be an Email user terminal program, also called an automatic Email receiving program. In the present invention, it is for detecting the number corresponding to an incoming call or a ringing time and for receiving an Email. When the automatic Email receiving device (not shown in Fig. 1) within the user mobile terminal 3 detects that the incoming call comes from the Email processing device, it is automatically connected to access the Email processing device to download the new Email sent to the user. In the absence of the number corresponding to the incoming call displayed, if the ringing time meets the designated time interval, i.e., the line hangs off within a certain time, it is regarded as a notice for a new Email. The automatic Email receiving device is automatically connected to access the Email processing device to download the new Email sent to the user. Moreover, the automatic Email receiving device notifies the user of the arrival of the new Email by voice, text or vibrating information.

The mobile network 4 is a common mobile network, including mobile networks such as GSM, CDMA, 3G and the like, which is connected to the internet by way of GPRS or other communication modes and provides internet connecting function for the mobile phone user.

The PSTN phone network 5 is a common prior fixed phone network, which provides phone wires for the communication between the call informing device 2 and the user mobile terminal 3, which can also be replaced by the mobile network 4.

The Internet network 6 is a common prior network, which is for transferring the Email in the present invention.

Fig. 2 shows a flow chart of the embodiment. The connecting lines between individual devices indicate the communication directions. The numbers within the black circles beside the connecting lines represent corresponding steps 1 to 3. To facilitate the illustration, the mobile network, phone network and the internet parts are not shown in this figure. These steps are briefly described as follows:
Step 1: At the time when the Email processing device receives the new Email sent to the user, it finds out the mobile phone number for the user corresponding to the recipient of the new Email in said table according to the Email address for the recipient, and transfers the mobile phone number for the user to the call informing device.
Step 2: The call informing device instantly dials the mobile phone number for the user, and hands up the line automatically after getting through the mobile phone number for the user. Alternatively, the call informing device may automatically hang up the line within a certain time, for example, within one second, after getting through the mobile phone for the user.
Step 3: The mobile phone for the user receives the incoming call from the call informing device. The user recognizes from the number corresponding to the incoming call that the call comes from the Email processing device and thus knows that there is the new Email to receive. The user is thus able to be immediately connected to access the Email processing device to download the new Email sent to him.

The embodiment is suitable for any mobile phone users, so long as the user adopts a mobile network which provides a caller ID service. When the user recognizes from the number corresponding to the incoming call that the call is from the Email processing device, he knows there is the new Email to receive.

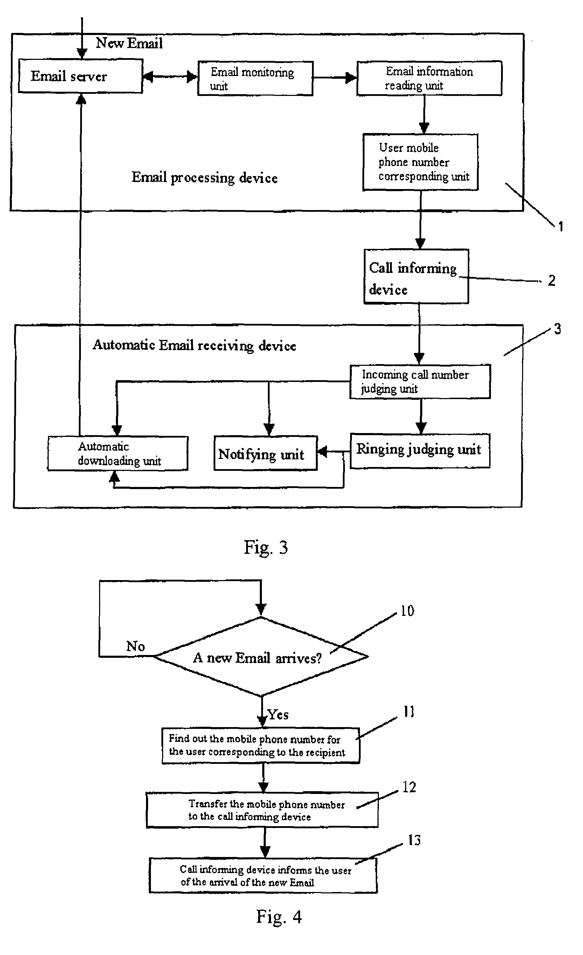

Fig. 3 is a diagram showing the structure connection of the system of the embodiment. At the server terminal, the Email processing device 1 comprises an Email server, an Email monitoring unit, an Email information reading unit and a user mobile phone number corresponding unit. The Email monitoring unit detects whether a new Email arrives at an Email server, and outputs information of the new Email, if any. The Email information reading unit receives the information of the new Email output by the Email monitoring unit, and then reads and outputs the Email address for the recipient of the new Email. The mobile phone number corresponding unit receives the Email address for the recipient of the new Email output by the Email information reading unit, and then finds out the corresponding mobile phone number for the user in said table based on the Email address for the recipient and outputs the phone number for the user to the call informing device which dials the mobile phone for the user with the caller ID applied for in advance.

The automatic Email receiving device at the user mobile terminal comprises an incoming call number judging unit, a ringing judging unit, a notifying unit and an automatic downloading unit. The incoming call number judging unit judges from the number corresponding to the incoming call whether the call comes from the Email processing device, and outputs information when it determines the call comes from the Email processing unit, while outputs a control signal to the ringing judging unit when it fails to detect the number corresponding to the incoming call; the ringing judging unit is attached to incoming call number judging unit and the notifying unit. When the incoming call number judging unit fails to detect the number corresponding to the incoming call, it judges whether the ringing time is shorter than a preset value, and outputs information to the notifying unit when the ringing time is shorter than the preset value; the notifying unit receives the information output from the incoming call number judging unit or the information output from the ringing judging unit, and notifies the user of the arrival of the new Email; the automatic downloading unit receives the information output from the incoming call number judging unit or the information output from the ringing judging unit, and is automatically connected to access the Email processing device to download the new Email sent to the user.

Fig. 4 shows a flow chart of the server terminal of the embodiment, which comprises the following steps:
At step 10, a table wherein an Email address for a user corresponds to a mobile phone number for the user is preset within an Email processing device which detects whether a new Email arrives at an Email server and, when the new Email arrives, step 11 is then executed;
At step 11, the Email processing device finds out the mobile phone number for the user corresponding to the recipient of the new Email in said table according to the received Email address for the recipient of the new Email, and step 12 is then executed.
At step 12, the Email processing device transfers the mobile phone number for the user to the call informing device, and step 13 is then executed.
At step 13, the call informing device informs the user of the arrival of the new Email according to the mobile phone number for the user by, for example, dialing the mobile phone for the user.

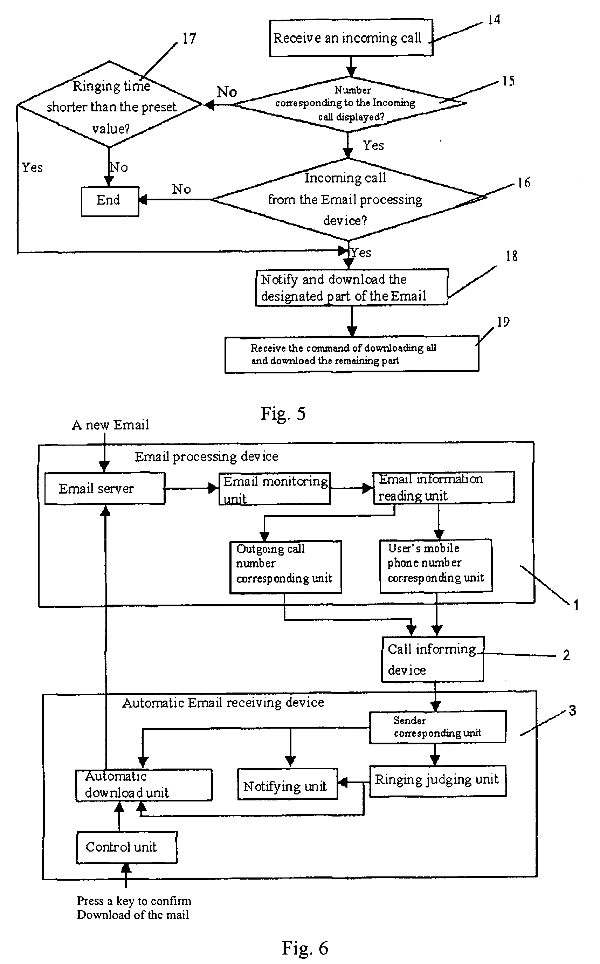

Fig.5 shows a flow chart of the user mobile terminal of the embodiment, which comprises the following steps:
At step 14, the user mobile terminal receives an incoming call, and step 15 is then executed;
At step 15, it judged whether an number corresponding to the incoming call is displayed, and step 16 is executed if so, or step 17 is executed if no;
At step 16, the automatic Email receiving device judges whether the incoming call comes from the Email processing device, and step 18 is executed if so, or the process ends if no;
At step 17, it is judged whether the ringing time is shorter than the preset value, and step 18 is executed if so, or the process ends if no;
At step 18, the user is notified of the arrival of the new Email, and then is automatically connected to access the Email processing device to download the new Email sent to the user, wherein only the material in designated data amounts in the most front of each Email is downloaded, for example, only 2000 bytes in the most front of the Email are downloaded. Step 19 is then executed;
At step 19, when going through the Email, the user can give a command of downloading all to the automatic Email receiving device by manually pressing a key if he thinks it necessary to read the whole Email. The automatic email receiving device will be connected once again to access the Email processing device to download the remaining non downloaded part of the Email. In this case, when the user receives a bulky Email, he has the alternative as to whether to download the full Email to the mobile phone, such that cost and time for data transmission are saved. The mobile phone may adapt GPRS or other methods, such as WiMax, WiFi or Bluetooth to be connected to access the Email processing device, which saves cost for dada transmission.

The embodiment is suitable for the conditions where the user is provided with a caller ID service, wherein the automatic Email receiving device at the user mobile terminal 3 knows that the call comes from the Email processing device 1 and that there is a new Email to receive according to the number corresponding to the incoming call.

The embodiment is also suitable for the conditions where the user is not provided with a caller ID service. For example, when the mobile phone is roaming, where the automatic Email receiving device at the user mobile terminal 3 fails to find out the number corresponding to the incoming call, it is capable of judging whether the call is from the Email processing device 1 by the ringing time length of the incoming call. Generally speaking, when people make phone calls, they seldom hang up the lines without waiting for more than one second. Consequently, it is feasible to judge the incoming call which rings less than one second as a call from the Email processing device 1. Even if other incoming calls are mistaken for the call from the Email processing device 1, the user mobile terminal 3 will know there is no new Email after being connected to access the Email processing device 1, which has no effect on the user. When the mobile phone receives an incoming call without the number shown, and when the ringing time is shorter than the designated value, for example, one second, the incoming call is probably from the Email processing device, which means that there is probably a new Email to receive. The above example is illustrated by taking one second as a designated value for the ringing time. Of course, other values may also be adopted, which are as well within the extent of the present invention.

### Embodiment 2

As described in Fig. 6, in contrast with embodiment 1, the Email processing device comprises an Email server, an Email monitoring unit, an Email information reading unit and a phone number for the user corresponding unit and an outgoing call corresponding unit. The Email monitoring unit detects whether a new Email arrives at an Email server, and outputs information of the new Email at the presence of the new Email; the Email information reading unit receives the new Email information output by the Email monitoring unit, reads and outputs the Email address for a recipient and the Email address for the sender of the new Email; the user mobile phone number corresponding unit receives the Email address for the recipient of the new Email output by the Email information reading unit, finds out the corresponding mobile phone number for the user in said table according to the Email address for the recipient, and outputs the mobile phone number for the user to the call informing device; the outgoing call number corresponding unit, for receiving the Email address for a recipient and the Email address for the sender of the new Email output by the Email information reading unit, finds out the account for the user according to the Email address for the recipient of the new Email, and then finds out in the account for the user the caller ID corresponding to the sender according to the Email address for the sender and outputs the caller ID corresponding to the sender to the call informing device. The automatic Email receiving device comprises a sender corresponding unit, a notifying unit, a control unit and an automatic downloading unit. The sender corresponding unit finds out the sender or the Email address for the sender corresponding to the number corresponding to the caller ID in the table of "sender - caller ID" set by the user according to the incoming number, and outputs the information about the sender; the notifying unit receives the information about the sender output by the sender corresponding unit, and notifies the user of the arrival of the new Email and displays the sender or the Email address for the sender; the control unit receives the downloading command from the user and outputs the control signal for downloading; the automatic downloading unit receives the information about the sender output by the sender corresponding unit and the control signal for downloading, and then is automatically connected to access the Email processing device to download the new Email sent to the user.

Said automatic Email receiving device further comprises a ringing judging unit attached to the sender corresponding unit as well as the notifying unit, which is for judging whether a ringing time is shorter than a preset value when the sender corresponding unit fails to detect the number corresponding to the incoming call, and which outputs information to the notifying unit to notify the user of the arrival of a new Email when the ringing time is shorter than the preset value

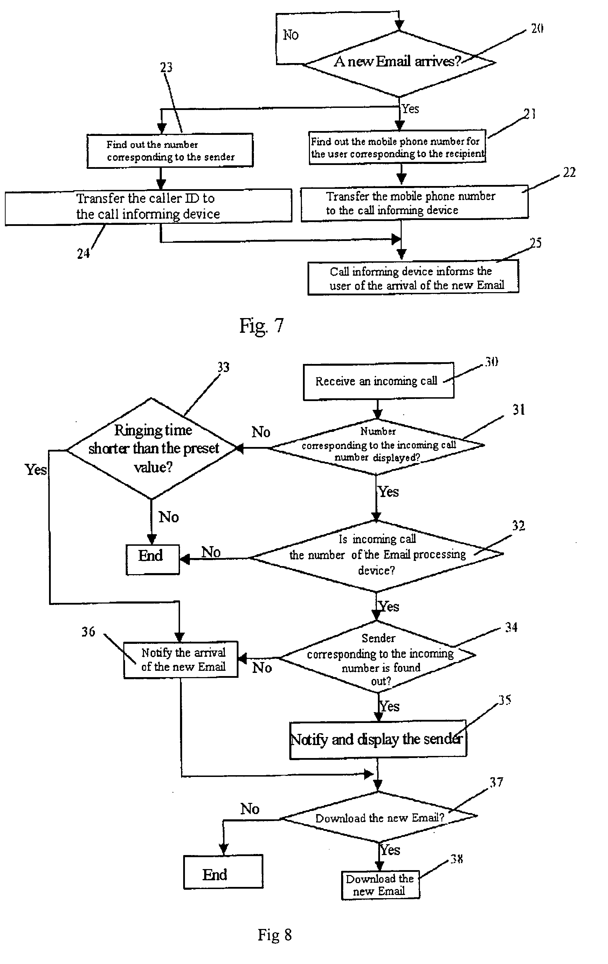

Fig 7 shows a flow chart of the server terminal of the embodiment, which comprises the following steps of:
At step 20, presetting a table wherein an Email address for a user corresponds to a mobile phone number for the user within an Email processing device which detects whether a new Email arrives at an Email server, and executing steps 21 and 23 when the new Email arrives;
At step 21, the Email processing device finding out the mobile phone number for the user corresponding to the recipient of the new Email in said table based on the Email address for the recipient of the new Email, and then executing step 22;
At step 22, transferring the mobile phone number for the user to the call informing device, and then executing step 25;
At step 23, finding out the caller ID corresponding to the sender in the account for the user according to the Email address for a recipient and the Email address for the sender of the received Email , and, when the caller ID corresponding to the sender is not found out, corresponding the sender to a preset caller ID, and then executing step 24;
At step 24, transferring the caller ID corresponding to the sender to the call informing device, and then executing step 25;
At step 25, dialing the mobile phone number for the user to inform the user of the arrival of the new Email with the caller ID corresponding to the sender by the call informing device.

Fig 8 shows a flow chart of the user mobile terminal of the embodiment, which comprises the following steps of:
At step 30, the user mobile terminal receiving an incoming call and executing step 31;
At step 31, judging whether the number corresponding to the incoming call is displayed, and executing step 32 if so, or step 33 if no;
At step 32, judging, by the automatic Email receiving device, whether the incoming call comes from the Email processing device, and executing step 34 if so, or ending the process if no;
At step 33, judging whether a ringing time is shorter than a preset value, and executing step 36 if so, or ending the process if no;
At step 34, based on the number corresponding to the incoming call, finding out the sender or the Email address for the sender corresponding to the number in the table preset by the user, and executing step 35 if found, or step 36 if no.
At step 35, notifying the user of the arrival of the new Email via voice or vibrating information, and displaying the sender or the Email address for the sender on the display of the mobile phone, and then executing step 37;
At step 36, notifying the user of the arrival of the new Email via voice or vibrating information without displaying the sender or the Email address for the sender, and then executing step 37;
At step 37, inquiring whether to download the Email and waiting for the user to input the choosing, and, when the user chooses to download, executing step 38, i.e., being automatically connected to download the Email; or when the user chooses not to download, ending the process. The user can make a choosing whether to download the Email based on the sender or the Email address for the sender displayed.

First of all, an Email processing device is established, which has its own independent domain name and IP address. In addition, a plurality of (for example, 10 to 1000) fixed phone numbers and phone wires are applied for the caller IDs (7). The call informing device is linked to the phone wires of the fixed phone numbers. Besides, each user is assigned an Email address which represents the user No. inside the Email processing device. The mobile phone number and the Email address for the user are stored in the user administrative record within the Email processing device. At the user mobile terminal, i.e., mobile phone or PDA mobile phone for the user, an Email user terminal program for special purpose, i.e., the automatic Email receiving device, is set up. At the same time, the SIM card corresponding to the registered mobile phone number should be inserted into the user mobile terminal.

The user should meanwhile establish an Email communication record (Email record) which contains the names, Email addresses and the caller IDs (7) of contact persons of the user. Each Email address is assigned a designated caller ID according to different persons or groups. These caller IDs are selected from plurality of fixed phone numbers applied for in advance within the Email processing device. The user stores the Email communication record (Email record) containing names, Email addresses and the corresponding caller IDs (7) of contact persons in the account for the user within the Email processing device as well as in the user mobile terminal. The structure of the Email communication record (Email record) is shown as Table 1:

**Table 1**

| Name of contact person | Email Address | Caller ID (7) |
|---|---|---|
| Others | | 34603000 |
| Huang Jinfu | Huangjinfu@123456abc.com | 34603001 |
| Zhou Huifang | lorinda@gmail.com | 34603002 |
| Chen Dawen | xsw@golowindows.com | 34603003 |
| Zhang San | ken@yhaoo.com | 34603004 |
| Li Si | wkf@china.com | 34603005 |
| Gao Jianqiang | winwin@126.com | 34603006 |
| Chen Junxi | fanny@starcyber.com | 34603007 |
| Huang Meimei | hmm@sendxq.com | 34603008 |

When the Email processing device receives the Emails sent to the user, it finds out the account for the user according to the Email address for the recipient and finds out the mobile phone number for the user corresponding to the recipient. From the Email address for the sender in the Email, it moreover finds out in the Email communication record for the user the caller ID corresponding to the Email address set by the user. Then the system dials the mobile terminal for the user instantly to inform the user of the arrival of the new Email by the phone wires of the caller IDs set by the user of the call informing device. The call informing device hangs up the line immediately after getting through the line. Herein said "hanging up the line immediately after getting through the line" means hanging up the line immediately without the user's answering the phone when the user mobile terminal rings. The user doesn't answer the phone, so generally no fees are charged.

When the user mobile terminal receives an incoming call from the call informing device, the Email user terminal program finds out in the Email communication record (Email record) the corresponding Email address for the sender according to the caller ID and displays text on the display of the user mobile terminal, or/and gives a notifying sound to notify the user of the arrival of the new Email. Using the Email user terminal program, the user finds out the Email address corresponding to the recipient for the sender based on the caller ID, and knows about who sends the new Email to him.

After that, the user can make a decision whether to download and read the Email via the mobile phone or computer. Since the user can selectively download the Email by recognizing different senders via the number corresponding to the incoming call, the user does not have to download all Emails, such that both time and data flow amounts are saved. For example, ten Emails are sent to the user, among which only two is interesting to the user to read. After the mobile phone receives the incoming call from the call informing device, the user knows only two Emails are interesting to read using the Email user terminal program. He then presses a key to instruct the program to download these two Emails. Since the remaining 8 Emails are not downloaded, it can save 80% of data flow amounts as compared with common method for receiving an Email.

When the Email processing device fails to find out the caller ID corresponding to the sender according to the Email address for the sender in the Email, the call informing device will dial the user mobile terminal via the phone wire of a preset caller ID (i.e. the caller ID corresponding in the row of "Others" in Table 1). The user will know that the incoming Email is sent from other persons, and can make decision whether to download and read these Emails. Generally, most of Emails from strangers are some advertisements or junk Emails, and some are even virus carrying Emails. Hence, most people will not download and read these Emails. In possession of the technology as to recognizing Email address for the sender via the number corresponding to the incoming call, the user can selectively download the Email, such that cost and time spent on communication are saved.

## Claims

1. A system for receiving an Email instantly via a mobile phone, comprising:
an Email processing device comprising a preset table wherein an Email address for a user corresponds to a mobile phone number for the user, the Email processing device being used for detecting whether a new Email arrives at an Email server, and finding out the mobile phone number for the user corresponding to a recipient of the new Email in said table according to the Email address for the recipient of the new Email when the new Email arrives; and
a call informing device attached to the Email processing device, which is for dialing the mobile phone number for the user to inform the user of the arrival of the new Email according to the mobile phone number for the user found out by the Email processing device.

2. The system according to claim 1, wherein the Email processing device comprises:
an Email monitoring unit for detecting whether the new Email arrives at the Email server, and outputting new Email information when the new Email arrives;
an Email information reading unit for receiving the new Email information output by the Email monitoring unit, reading and outputting the Email address for the recipient of the new Email; and
a user mobile phone number corresponding unit for receiving the Email address for the recipient of the new Email output by the Email information reading unit, which finds out the mobile phone number for the user corresponding to the recipient of the new Email in said table according to the Email address for the recipient of the new Email and outputs the mobile phone number for the user to the call informing device.

3. The system according to claim 1 or 2, wherein the call informing device is a MODEM for dialing the mobile phone number for the user.

4. A system for receiving an Email instantly via a mobile phone, comprising:
an Email processing device comprising a preset table wherein an Email address for a user corresponds to a mobile phone number for the user, the Email processing device being used for detecting whether a new Email arrives at an Email server, and finding out the mobile phone number for the user corresponding to a recipient of the new Email in said table according to the Email address for the recipient when the new Email arrives;
a call informing device attached to the Email processing device, which is for informing the user of the arrival of the new Email according to the mobile phone number for the user found out by the Email processing device; and
an automatic Email receiving device located at a user mobile terminal, which is for detecting an incoming call and receiving an Email, and automatically being connected to access the Email processing device to download the new Email sent to the user when the incoming call comes from the Email processing device.

5. The system according to claim 4, wherein the Email processing device comprises:
an Email monitoring unit for detecting whether the new Email arrives at the Email server, which outputs new Email information when the new Email arrives;
an Email information reading unit for receiving the new Email information output by the Email monitoring unit, which reads and outputs the Email address for the recipient of the new Email; and
a user mobile phone number corresponding unit for receiving the Email address for the recipient of the new Email output by the Email information reading unit, which finds out the mobile phone number for the user corresponding to the recipient in said table according to the Email address for the recipient of the new Email and outputs the mobile phone number for the user to the call informing device;
the automatic Email receiving device comprises:
an incoming call number judging unit for judging whether the incoming call comes from the Email processing device based on a number corresponding to the incoming call, which outputs information when the incoming call comes from the Email processing device;
a notifying unit for receiving the information output from the incoming call number judging unit, which notifies the user of the arrival of the new Email; and
an automatic downloading unit for receiving the information output from the incoming call number judging unit, which is automatically connected to access the Email processing device to download the new Email sent to the user.

6. The system according to claim 5, wherein the automatic Email receiving device further comprises:
a ringing judging unit attached to the incoming call number judging unit and the notifying unit, which is for judging whether a ringing time is shorter than a preset value when the incoming call number judging unit fails to detect the number corresponding to the incoming call, and which outputs information to the notifying unit when the ringing time is shorter than the preset value.

7. A method for receiving an Email instantly via a mobile phone, comprising the steps of:
A1. presetting a table wherein an Email address for a user corresponds to a mobile phone number for the user within an Email processing device, the Email processing device detects whether a new Email arrives at an Email server, and finds out the mobile phone number for the user corresponding to a recipient of the new Email in said table according to the Email address for the recipient of the new Email when the new Email arrives; and
B1. dialing the mobile phone number for the user to inform the user of the arrival of the new Email and hanging up automatically within a preset time after getting through.

8. A method for receiving an Email instantly via a mobile phone, comprising the steps of:
A2. presetting a table wherein an Email address for a user corresponds to a mobile phone number for the user within an Email processing device, the Email processing device detects whether a new Email arrives at an Email server, and finds out the mobile phone number for the user corresponding to a recipient in said table according to the Email address for the recipient of the new Email when the new Email arrives;
B2. dialing the mobile phone number for the user to inform the user of the arrival of the new Email; and
C2. automatically being connected to access the Email processing device to download the new Email sent to the user when an automatic Email receiving device located at a user mobile terminal determines that an incoming call comes from the Email processing device based on a number corresponding to the incoming call.

9. The method according to claim 8, further comprising the step of:
if the automatic Email receiving device fails to detect the number corresponding to the incoming call in said step C2, judging whether a ringing time is shorter than a preset value, and if so, automatically being connected to access the Email processing device to download the new Email sent to the user.

10. The method according to claim 8 or 9, further comprising the step of:
inquiring of the user whether to download the Email before the automatic Email receiving device is automatically connected to receive the Email in said step C2,
wherein if the user chooses to download the Email, the automatic Email receiving device automatically is connected to access the Email processing device to download the new Email sent to the user, so long as the user simply presses a key preset on the user mobile terminal.

11. A system for receiving an Email instantly via a mobile phone, comprising:
an Email processing device comprising a preset table wherein an Email address for a user corresponds to a mobile phone number for the user, and setting up an account for the user wherein an Email address for an sender corresponds to a caller ID for informing the user according to a setup for the user in the account, the Email processing device being for detecting whether a new Email arrives at an Email server, finding out the mobile phone number for the user corresponding to a recipient of the new Email in said table according to the Email address for the recipient of the new Email when the new Email arrives, and finding out, in the account for the user, the caller ID corresponding to the sender according to the Email address for the sender; and
a call informing device attached to the Email processing device, which is for dialing the mobile phone for the user to inform the user of the arrival of the new Email with the caller ID corresponding to the sender, according to the mobile phone number for the user found out by the Email processing device.

12. The system according to claim 11, wherein the Email processing device comprises:
an Email monitoring unit for detecting whether the new Email arrives at the Email server, and outputting new Email information when the new Email arrives;
an Email information reading unit for receiving the new Email information output by the Email monitoring unit, reading and outputting the Email address for the recipient and the Email address for the sender of the new Email;
a user mobile phone number corresponding unit for receiving the Email address for the recipient of the new Email output by the Email information reading unit, which finds out the mobile phone number corresponding to the recipient in said table according to the Email address for the recipient and outputs the mobile phone number for the user to the call informing device; and
an outgoing call number corresponding unit for receiving the new Email address for the recipient and the Email address for the sender of the new Email output by the Email information reading unit, which finds out the account for the user based on the Email address for the recipient of the new Email, and then finds out, in the account for the user, the caller ID corresponding to the sender based on the Email address for the sender and outputs the caller ID corresponding to the sender to the call informing device.

13. A system for receiving an Email instantly via a mobile phone, comprising:
an Email processing device comprising a preset table wherein an Email address for a user corresponds to a mobile phone number for the user, and setting up an account for the user wherein an Email address for an sender corresponds to a caller ID for informing the user according to a setup for the user in the account, the Email processing device being for detecting whether a new Email arrives at the Email server, finding out the mobile phone number for the user corresponding to a recipient of the new Email in said table according to the Email address for the recipient of the new Email when the new Email arrives, and finding out, in the account for the user, the caller ID corresponding to the sender according to the Email address for the sender;
a call informing device attached to the Email processing device, which is for dialing the mobile phone for the user to inform the user of the arrival of the new Email with the caller ID corresponding to the sender, according to the mobile phone number for the user found out by the Email processing device; and
an automatic Email receiving device located at a user mobile terminal, which is for detecting an incoming call and receiving an Email, wherein, if the incoming call comes from the Email processing device, the automatic Email receiving device finds out the sender or Email address for the sender corresponding to the caller ID in a table of "sender - caller ID" set by the user, displays the sender or the Email address for the sender on a display, and inquires of the user whether to download the Email; and, if the user chooses to download, automatically connected to access the Email processing device to download the new Email sent to the user, so long as the user simply presses a key preset on the user mobile terminal.

14. The system according to claim 13, wherein the Email processing device comprises:
an Email monitoring unit for detecting whether the new Email arrives at the Email server, which outputs new Email information when the new Email arrives;
an Email information reading unit for receiving the new Email information output by the Email monitoring unit, which reads and outputs the Email address for the recipient and the Email address for the sender of the new Email;
a user mobile phone number corresponding unit for receiving the Email address for the recipient of the new Email output by the Email information reading unit, which finds out the mobile phone number for the user corresponding to the recipient in said table according to the Email address for the recipient and outputs the mobile phone number for the user to the call informing device; and
an outgoing call number corresponding unit for receiving the Email address for the recipient and the Email address for the sender of the new Email output by the Email information reading unit, which finds out the account for the user based on the Email address for the recipient of the new Email, and then finds out, in the account for the user, the caller ID corresponding to the sender based on the Email address for the sender, and outputs the caller ID corresponding to the sender to the call informing device;
the automatic Email receiving device comprises:
a sender corresponding unit, which is for finding out the sender or the Email address for the sender corresponding to the caller ID in the table of "sender - caller ID" set by the user based on the caller ID, and outputting information about the sender;
a notifying unit for receiving the information about the sender output by the sender corresponding unit, which notifies the user of the arrival of the new Email and displays the sender or the Email address for the sender;
a control unit for receiving a download command from the user and outputting a control signal for downloading; and
an automatic downloading unit for receiving the information about the sender output by the sender corresponding unit and the control signal for downloading from the user, which then is automatically connected to access the Email processing device to download the new Email sent to the user.

15. A method for receiving an Email instantly via a mobile phone, comprising the steps of:
A3. presetting a table wherein an Email address for a user corresponds to a mobile phone number for the user within an Email processing device, and setting up an account for the user wherein an Email address for an sender corresponds to a caller ID for informing the user according to a setup for the user in the account, the Email processing device being for detecting whether a new Email arrives at an Email server, and finding out the mobile phone number for the user corresponding to a recipient of the new Email in said table according to the Email address for the recipient of the new Email when the new Email arrives;
B3. finding out the caller ID corresponding to the sender in the account for the user, based on the Email address for the sender;
C3. dialing the mobile phone number for the user by the call informing device to inform the user of the arrival of the new Email with the caller ID corresponding to the sender, and hanging up automatically within a certain time after getting through.

16. The method according to claim 15, wherein dialing the mobile phone for the user with a preset caller ID if the caller ID corresponding to the sender is not found out in step B3.

17. A method for receiving an Email instantly via a mobile phone, comprising the steps of:
A4. presetting a table wherein an Email address for a user corresponds to a mobile phone number for the user within an Email processing device, and setting up an account for the user wherein an Email address for an sender corresponds to a caller ID for informing the user according to a setup for the user in the account, the Email processing device being for detecting whether a new Email arrives at an Email server, and finding out the mobile phone number for the user corresponding to a recipient in said table according to the Email address for the recipient of the new Email when the new Email arrives;
B4. finding out the caller ID corresponding to the sender in the account for the user according to the Email address for the sender;
C4. dialing the mobile phone number for the user to inform the user of the arrival of the new Email by a call informing device with the caller ID corresponding to the sender;
D4. judging, by an automatic Email receiving device located at a user mobile terminal, whether an incoming call comes from the Email processing device and finding out the sender or the Email address for the sender corresponding to the incoming call according to the setup for the user in the account; and
E4. displaying the sender or the Email address of the sender on a display of a user mobile terminal, and inquiring of the user whether to download the Email wherein, if the user chooses to download, the automatic Email receiving device is automatically connected to access the Email processing device to download the new Email sent to the user, so long as the user simply presses a key preset on the user mobile terminal.
